# EUROPÄISCHE PATENTSCHRIFT

(11) **EP 0 617 792 B1**
(45) Veröffentlichungstag und Bekanntmachung des Hinweises auf die Patenterteilung: **25.10.1995**
(21) Anmeldenummer: 92924675.9
(22) Anmeldetag: 05.12.1992
(51) Int. Cl.: G01P 3/488, G01P 1/00, G01D 5/14, G01D 18/00

(54) **DREHZAHLSENSOR, INSBESONDERE ZAHNRADSENSOR**
RPM SENSOR, IN PARTICULAR FOR A GEARWHEEL
CAPTEUR DE VITESSE DE ROTATION, NOTAMMENT POUR ROUES DENTEES

(30) Priorität: 19.12.1991 DE 4141958
(43) Veröffentlichungstag der Anmeldung: 05.10.1994
(73) Patentinhaber: ITT Automotive Europe GmbH, 60488 Frankfurt am Main (DE)
(72) Erfinder: MATHES, Joachim, D-7100 Heilbronn-Böckingen (DE); PIRRUNG, Jürgen, D-7121 Erlingheim (DE); WEHLING, Hans-Wilhelm, D-4200 Oberhausen 11 (DE)
(74) Vertreter: Portwich, Peter
(86) Internationale Anmeldenummer: EP9202816
(87) Internationale Veröffentlichungsnummer: WO9312434

(56) Entgegenhaltungen:
- EP-A- 0 363 738
- WO-A-89/10540
- US-A- 4 090 099
- US-A- 4 829 248
- IBM TECHNICAL DISCLOSURE BULLETIN, Bd. 30, Nr. 6, November 1987, New York, US; Seiten 255-257:"Adjustable transducer mount for rotary encoder"
- "Sensors", Bd.5: Magnetic Sensors; ed. by R.Boll, Weinheim (DE), 1989, S.81-87

## Beschreibung

Die Erfindung bezieht sich auf einen Drehzahlsensor, insbesondere einen Zahnradsensor mit einem Magneten und zwei damit zusammenwirkenden, im seitlichen Abstand voneinander angeordneten Hall-Elementen, wobei ein einen unregelmäßigen Umfang oder mit Unstetigkeitsstellen versehenen Umfang aufweisendes Bauteil aus ferromagnetischen Material, insbesondere ein Zahnrad, dessen Drehwinkel oder Drehzahl ermittelt werden soll, in Richtung des Seitenabstands an den Hall-Elementen vorbeibewegbar ist.

Mit Hilfe eines solchen Drehzahlsensors kann man die Drehzahl eines Bauteils oder auch nur seine spezielle Stellung bei Stillstand ermitteln und in ein entsprechendes Signal umsetzen, das in einer entsprechenden elektronischen Einrichtung weiterverarbeitet werden kann. Man verwendet solche Drehzahlsensoren überall dort, wo es Drehzahlen oder auch nur Drehwinkel zu erfassen gilt. Ein besonderes Anwendungsgebiet sind Kraftfahrzeuge und dort im speziellen das automatische Bremssystem (ABS) oder die Antischlupfregelung (ASR) für die angetriebenen Räder oder auch das Motor- und Getriebemanagement.

Solche Drehzahlsensoren sind hochgenaue Einheiten, deren Elemente nicht nur sehr genau hergestellt, sondern auch einander zugeordnet werden müssen. Dies gilt insbesondere hinsichtlich des Magneten und der beiden Hall-Elemente.

Im Falle eines Zahnradsensors laufen an dem Hall-IC mit den beiden Hall-Elementen, dem Magneten sowie den elektronischen Einrichtungen, wie bspw. einer Schutzbeschaltung, die Zähne des Zahnrads nacheinander vorbei. Jeder Zahn ergibt einen Impuls und durch Zählen der Impulse kann man die Drehzahl ermitteln. Genauer gesagt ist es allerdings so, daß der Drehzahlsensor nicht den Zahn als solchen erkennt, sondern jeweils den Übergang von Zahn zu Zahnlücke oder umgekehrt. Ein komplettes Signal entsteht somit, wenn am Drehzahlsensor jeweils ein Zahn und eine Zahnlücke vorbeigegangen sind oder anders ausgedrückt, wenn das Zahnrad um eine Einheit aus Zahn und Zahnlücke weitergedreht worden ist.

Der Sensor erfasst zunächst einmal das sog. Grundfeld des Magneten. Zu dieser Feldstärke des Grundfelds wird noch ein aus der Masse des Zahnrads o.dgl. Bauteils herrührende Feldstärke hinzuaddiert. Wenn dann dem Sensor anstelle einer Zahnlücke ein Zahn zugeordnet ist, so führt dies für die Dauer der Zuordnung des Zahns zum Sensor zu einer nochmaligen Verstärkung des Magnetfelds. Wenn sich also das Zahnrad dreht, so erfolgt eine Schwankung der Feldstärke in Abhängigkeit vom Vorbeibewegen der Zähne und Zahnlücken am Sensor.

Weil aber in Drehrichtung des Zahnrads gesehen die beiden Hall-Elemente des Drehzahlsensors in Umfangsrichtung des Zahnrads bzw. des Bauteils versetzt sind, kommt der Zahn zunächst am einen und nach einem gewissen Drehwinkel am zweiten Hall-Element an. Die hieraus resultierenden Schwingungen des Magnetfelds der beiden Sensoren sind über die Zeit gesehen gegeneinander versetzt.

Wenn allerdings ein stillstehender Zahn gleichzeitig beiden Hall-Elementen gegenübersteht, so ist die Gesamtmangnetstärke an beiden Hall-Elementen gleich groß. Wenn man nun die Differenz in einem entsprechenden Differenzverstärker bildet, ergibt dies den Wert Null. Sofern sich das Zahnrad o.dgl. Bauteil dreht, sind, wie gesagt, die beiden Schwingungen über die Zeit gesehen gegeneinander versetzt, weswegen ein Differenzverstärker ein endliches Signal abgibt. Dabei heben sich allerdings die Werte für das Grundfeld und die Masse des Bauteils gegeneinander auf, so daß die Schwingung nur noch die Erhöhung der magnetischen Feldstärke, welche durch den Zahn bedingt ist, umfasst.

Mit Hilfe eines sog. Schmitt-Triggers kann man das analoge Signal, welches die beiden Hall-Elemente wie gesagt zeitlich versetzt erhalten und welches aus einem Differenzverstärker herauskommt in eine digitale Impulsfolge umsetzen. Diese kann dann an eine entsprechende Elektronik zur Verarbeitung weitergeleitet werden.

Aus dem Vorstehenden wird deutlich, daß das Differenzsignal nur dann dem theoretischen Wert entspricht, wenn auch alle Voraussetzungen korrekt erfüllt sind. Dies ist aber in der Praxis nicht der Fall, weil die verwendeten Magnete hinsichtlich ihrer Feldstärke vom idealen Wert mitunter nicht unbeträchtlich abweichen können. Über die Fläche bspw. des wirksamen Pols gesehen kann der Verlauf der Feldstärke so abweichen, daß trotz einer korrekten geometrischen Zuordnung des Magneten zu den beiden Hall-Elementen diese unterschiedliche Werte der Magnetfeldstärke des Grundfelds erfassen. Weil aber die Magnete in aller Regel Permanentmagnete sind und infolgedessen ihre Struktur fehlerhaft sein kann, läßt sich bei den vorbekannten Drehzahlsensoren dieses Problem nicht ausschalten. Ähnliches gilt für die Fertigungstoleranzen der Auswerteschaltung. Es ist nicht zu vermeiden, daß Asymmetrien zwischen den Hall-Elementen oder im Differenzsignal bestehen. Die Folge ist ein fehlerhaftes Funktionieren des Drehzahlsensors bis hin zu einem völligen Ausfall.

Nach US-A-4 829 248 ist es bekannt, jedem Hallsensor einem eigenen justierbaren Kalibriermagneten zuzuordnen. Der Sensor wird dort von rotierenden Magneten beaufschlagt. Es liegt infolgedessen die Aufgabe vor, einen Drehzahlsensor der eingangs genannten Art so weiterzubilden, daß Fehler in der Struktur des Magneten oder der Auswerteschaltung bzw. der Elemente erfaßt und ausgeglichen werden können um dadurch das einwandfreie Funktionieren des Drehzahlsensors zu gewährleisten.

Zur Lösung dieser Aufgabe wird erfindungsgemäß vorgeschlagen, daß der Drehzahlsensor gemäß dem Oberbegriff des Anspruchs 1 entsprechend dem kennzeichnenden Teil dieses Anspruchs ausgebildet ist.

Wenn nun der Magnet oder die Auswerteschaltung bzw. die Elemente eine fehlerhafte Struktur hat, welche bspw. einen asymmetrischen Verlauf der magnetischen Feldstärke über die Fläche gesehen oder auch nur Fehler im Kurvenverlauf zur Folge hat, welche dazu führt, daß es bei korrekter geometrischer Ausrichtung des Drehzahlsensors gegenüber dem Bauteil oder einem Zahn des Zahnrads zu unterschiedlichen Ausgangssignalen der beiden Hall-Elemente kommt, so läßt sich dies dadurch korrigieren, daß man innerhalb des Drehzahlsensors den Magneten in Richtung des Abstands der beiden Hall-Elemente solange verschiebt bis beide bei stehendem Zahn die gleiche Gesamtstärke des Magnetfelds feststellen. Nunmehr kann auch über einen Differenzverstärker ein korrektes Differenzsignal gebildet werden, welches man dann auswerten oder ggf. umwandeln und auswerten kann. Über geeignete Anzeigeinstrumente läßt sich die Gesamtfeldstärke der beiden Hall-Elemente leicht darstellen, überwachen und korrigieren.

Somit kann die optimale Montageposition des Magneten gegenüber dem Hall-IC auf einfache Weise genau bestimmt werden.

Eine Weiterbildung der Erfindung sieht vor, daß der Hall-IC im Drehzahlsensor fest montiert und der Magnet gegenüber dem Hall-IC verschiebbar gelagert ist. Es ist insofern die vorteilhaftere Lösung gegenüber einer Verschiebung des Hall-IC als der Magnet keine elektrischen Anschlüsse besitzt.

Eine besonders bevorzugte Ausführungsform der Erfindung kennzeichnet sich dadurch, daß der Magnet in einem Halter befestigt und der Halter verschiebbar in einem Gehäuse des Drehzahlsensors gehalten ist. Dies ermöglicht eine herkömmliche Form des Magneten trotz seiner verschiebbaren Lagerung. In bevorzugter Weise hat der Magnet eine kreiszylindrische Gestalt.

Eine andere Variante der Erfindung ist durch eine in der Art einer Nut-Feder-Verbindung ausgebildete Längsführung gekennzeichnet, wobei sich die Feder vorzugsweise am Halter des Magneten befindet. Der Halter kann leicht aus Blech o.dgl. hergestellt werden, wobei er allerdings die magnetischen Eigenschaften nicht stören darf.

Desweiteren ist es sehr vorteilhaft, wenn der Magnethalter nach dem Justieren des Drehzahlsensors fixier-bar ist, insbesondere durch Verstemmen. Gerade im letzteren Falle ist die aufgefundene optimale Position mit geringsten Mitteln zu sichern.

Die Erfindung wird nachstehend anhand der Zeichnung näher erläutert. Die Zeichnung zeigt verschiedene Ausführungsbeispiele der Erfindung. Hierbei stellen dar:
- Figur 1: In der Seitenansicht eine erste Ausführungsform, teilweise in Längsrichtung geschnitten;
- Figur 2: eine Seitenansicht einer zweiten Ausführungsform der Erfindung mit angedeutetem Zahnrad;
- Figur 3: eine Draufsicht auf die Figur 2 zusammen mit einem Zahnrad;
- Figur 4: in perspektivischer und explosionsartiger Darstellung eine dritte Variante der Erfindung.

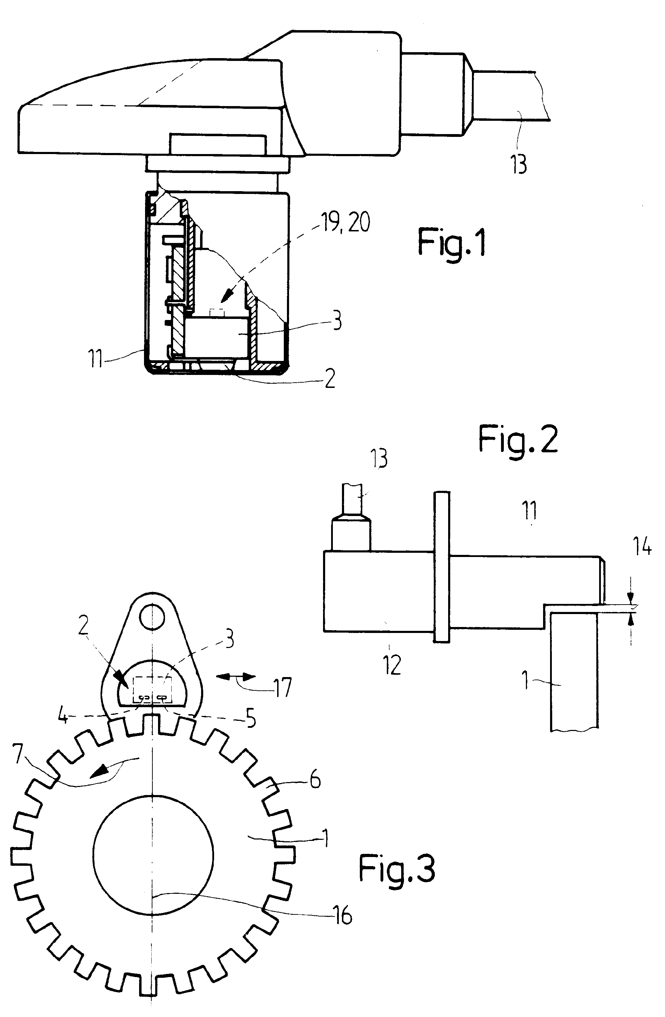

Nachfolgend wird davon ausgegangen, daß es sich in allen Fällen um einen Zahnradsensor handelt, der in Verbindung mit einem Zahnrad 1 verwendet werden soll. Der den Hall-IC 2 und den Magneten 3 aufweisende Bereich wird den Zähnen 6 des Zahnrads 1 in der aus den Figuren 2 und 3 ersichtlichen Weise zugeordnet. Der Hall-IC 2 ist mit zwei Hall-Elementen 4 und 5 ausgestattet, die gemäß Figur 3 etwa in Umfangsrichtung des Zahnrads 1 gesehen seitlich gegeneinander versetzt sind, so daß jeder Zahn 6 zunächst das Hall-Element 5 und anschließend das Hall-Element 4 erreicht, wenn sich das Zahnrad im Sinne des Pfeils 7 dreht.

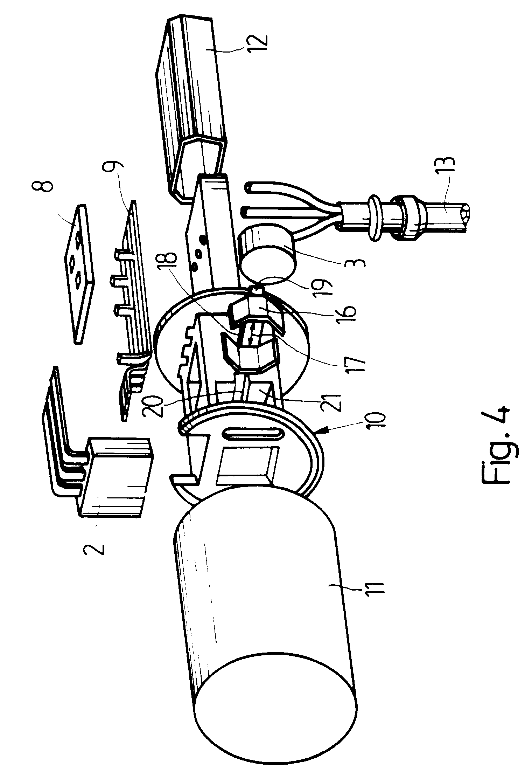

Gemäß Figur 4 ist jeder Sensor mit einer Platine 8 ausgestattet, welche eine Reihe von elektronischen Bauelementen, insbesondere eine Schutzbeschaltung aufweist. Hinzu kommen innere elektrische Anschlußelemente 9, ein Grundkörper 10, zwei Abdeckungen 11,12 - beim Ausführungsbeispiel der Figur 4 - sowie ein Anschlußkabel 13. Weitere nicht näher beschriebene Elemente können von bekannter Art sein.

Aus den Figuren 2 und 3 ersieht man, daß zwischen dem Zahnrad 1 und dem Sensor im Bereich des Hall-IC 2 und des Magneten 3 ein vorgegebener Spaltabstand 14 ist, und daß die beiden Hall-Elemente 4 und 5 einem bspw. auf der Y-Achse 16 stehenden Zahn so zugeordnet sind, daß sie in Drehrichtung gesehen oder seitlich betrachtet von dieser Y-Achse den gleichen Seitenabstand aufweisen.

Wenn der Magnet 3 nicht fehlerfrei ist, oder die Hall-Elemente 4 und 5 bzw. deren Auswerteschaltung elektrisch nicht völlig symmetrisch ausgeführt sind, was in der Praxis häufig vorkommt, so bedeutet dies, daß in der Konfiguration gemäß Figur 3 die Hall-Elemente 4 und 5 ein unterschiedliches Gesamtmagnetfeld feststellen, obwohl es theoretisch genau gleich sein müßte. Das liegt vor allen Dingen daran, daß das Magnetfeld bezüglich bspw. dieser Y-Achse 16 asymmetrisch verläuft oder eines der Elemente eine größere Empfindlichkeit besitzt. Dieses kann sich so auswirken, daß bspw. die Feldstärke aus dem Magneten am Hall-Element 5 einen größeren Wert ergibt als am Hall-Element 4 oder umgekehrt.

Um nun hier eine Grundeinstellung zu ermöglichen, welche solche "Fehler" des Magneten korrigiert, wird erfindungsgemäß vorgeschlagen, daß der Magnet 3 gemäß Figur 4 in einen Halter 16 eingesetzt wird, der im Sinne des Doppelpfeils 17 im Innern des Drehzahlsensors bzw. gegenüber dem Grundkörper 10 verschiebbar und in der endgültigen Verschiebestellung arretierbar gehalten ist. Bei einem kreiszylindrischen Magneten 3 kann der Halter bspw. aus zwei bogenförmigen Haltelappen bestehen, die über einen Bodensteg 18 des Halters 16 miteinander verbunden sind. An der vom Magneten 3 wegweisenden Seite des Bodenstegs 18 befindet sich eine Feder 19, die mit einer Nut 20 des Grundkörpers 10 eine Nut-Feder-Verbindung bildet, welche die einwandfreie Verschiebung des Halters 16 und damit auch des Magneten 3 in Richtung des Doppelpfeils 17, d.h. in Richtung des Seitenabstands der beiden Hall-Elemente 4 und 5 ermöglicht. In Figur 3 ist zur Verdeutlichung der Doppelpfeil 17 nochmals eingetragen. Außerdem ist in Figur 1 die Nut-Feder-Verbindung 19,20 angedeutet. Die Verschiebung verläuft demnach in Figur 1 senkrecht zur Blattebene. Nach dem Einstellen des Magneten gegenüber dem Hall-IC 2 bzw. seinen beiden Hall-Elementen 4 und 5 wird der Halter 16 im Grundkörper 10 durch Verstemmen fixiert. Im übrigen ergibt sich aus Figur 4, daß man den Halter 16 bspw. in einer tunnelartigen Aufnahme 21 des Grundkörpers 10 verschieben kann. Er ist dadurch aushebesicher geführt.

Die Wirkungsweise dieses Drehzahlsensors ist bekannt und braucht deshalb nicht näher erläutert zu werden. Der Hall-IC 2 gibt jedesmal einen Impuls an eine Steuerung bspw. für ABS, ASR oder Motormanagement eines Kraftfahrzeugs ab, wenn eine Signalperiode aus Zahn und Zahnlücke beendet ist. Aus der Zahl der Zähne und der Zahl der Impulse kann man auf die Drehzahl des Zahnrads 1 und damit drehverbundener Elemente schließen.

## Patentansprüche

1. Drehzahlsensor, insbesondere Zahnradsensor, mit einem Magneten (3) und zwei damit zusammenwirkenden, im seitlichen Abstand voneinander angeordneten Hall-Elementen (4, 5), wobei ein einen unregelmäßigen Umfang oder einen mit Unstetigkeitsstellen versehenen Umfang aufweisendes Bauteil aus ferromagnetischem Material, insbesondere ein Zahnrad (1), dessen Drehwinkel (7) oder Drehzahl ermittelt werden soll, in Richtung des Seitenabstands an den Hall-Elementen (4, 5) vorbeibewegbar ist, **gekennzeichnet durch** eine relativverschiebliche Anordnung in Richtung des Seitenabstandes der Hall-Elemente (4, 5) zwischen einem die Hall-Elemente aufweisenden Hall-IC (2) und dem Magneten (3) im Drehzahlsensor.

2. Drehzahlsensor nach Anspruch 1, dadurch gekennzeichnet, daß der Hall-IC (2) im Drehzahlsensor fest montiert und der Magnet (3) gegenüber dem Hall-IC (2) verschiebbar gelagert ist.

3. Drehzahlsensor nach Anspruch 2, dadurch gekennzeichnet, daß der Magnet (3) in einem Halter (16) befestigt und der Halter verschiebbar in einem Gehäuse (10,11,12) des Drehzahlsensors gelagert ist.

4. Drehzahlsensor nach Anspruch 3, gekennzeichnet durch eine in der Art einer Nut-Feder-Verbindung (19,20) ausgebildete Längsführung, wobei sich die Feder (19) vorzugsweise am Halter (16) des Magneten (3) befindet.

5. Drehzahlsensor nach Anspruch 3 oder 4, dadurch gekennzeichnet, daß zusätzlich Mittel vorgesehen sind, die so ausgebildet sind, daß der Magnet-Halter (16) nach dem Justieren im Gehäuse (10,11,12) des Drehzahlsensors fixiert werden kann, insbesondere durch Verstemmen.

## Claims

1. A rotational speed sensor, in particular a gear wheel sensor, including a magnet (3) and two Hall effect elements (4, 5) cooperating therewith and arranged in laterally spaced relationship one to the other, wherein a component part made of ferromagnetic material, in particular a gear wheel (1), which has an irregular periphery or a periphery with points of discontinuity, and the angle of rotation (7) or rotational speed of which is to be determined, is movable past the Hall effect elements (4, 5) in the direction of the lateral distance,
**characterized** by an arrangement of a Hall IC (2) including the Hall effect elements, and the magnet (3) in the rotational speed sensor, which arrangement is displaceable in the direction of the lateral distance of the Hall effect elements (4, 5).

2. A rotational speed sensor as claimed in claim 1, **characterized** in that the Hall IC (2) is rigidly mounted in the rotational speed sensor, and the magnet (3) is slidably supported relative to the Hall IC (2).

3. A rotational speed sensor as claimed in claim 2, **characterized** in that the magnet (3) is secured in a holding fixture (16), and the holding fixture is slidably supported in a housing (10, 11, 12) of the rotational speed sensor.

4. A rotational speed sensor as claimed in claim 3, **characterized** by a longitudinal guide which is provided in the type of a groove-and-tongue joint (19, 20), the tongue (19) being preferably arranged on the holding fixture (16) of the magnet (3).

5. A rotational speed sensor as claimed in claim 3 or claim 4, **characterized** in that an additional means is provided so that the magnet holding fixture (16), after the adjustment, can be fixed in position in the housing (10, 11, 12) of the rotational speed sensor, in particular by caulking.

## Revendications

1. Capteur de vitesse de rotation, notamment un capteur de roue dentée, comprenant un aimant (3) et deux éléments à effet Hall (4, 5) coopérant avec cet aimant et espacés transversalement l'un de l'autre, tandis qu'une pièce structurelle en matière ferro-magnétique, notamment une roue dentée (1), qui comporte une périphérie irrégulière ou une périphérie pourvue de discontinuités et dont la position angulaire (7) ou la vitesse de rotation doit être déterminée, est agencée de façon à pouvoir être déplacée en passant devant les éléments à effet Hall (4, 5) suivant la direction de l'espacement transversal, caractérisé par un agencement déplaçable en translation relative, suivant la direction de l'espacement transversal des éléments à effet Hall (4, 5), dans le capteur de vitesse de rotation et entre un circuit intégré à effet Hall (2), comportant les éléments à effet Hall, et l'aimant (3).

2. Capteur de vitesse de rotation selon la revendication 1, caractérisé en ce que le circuit intégré à effet Hall (2) est monté d'une manière fixe dans le capteur de vitesse de rotation et en ce que l'aimant (3) est monté de façon à pouvoir être déplacé en translation vis-à-vis du circuit intégré à effet Hall (2).

3. Capteur de vitesse de rotation selon la revendication 2, caractérisé en ce que l'aimant (3) est fixé dans un support (16) et le support est monté de façon à pouvoir être déplacé en translation dans un boîtier (10, 11, 12) du capteur de vitesse de rotation.

4. Capteur de vitesse de rotation selon la revendication 3, caractérisé par des moyens de guidage longitudinal réalisés à la façon d'une liaison par rainure et languette (19, 20), la languette (19) étant de préférence située sur le support (16) de l'aimant (3).

5. Capteur de vitesse de rotation selon la revendication 3 ou 4, caractérisé en ce qu'il est en outre prévu des moyens qui sont agencés d'une façon telle que le support d'aimant (16) peut être immobilisé, notamment par matage, après le réglage dans le boîtier (10, 11, 12) du capteur de vitesse de rotation.
